## Europäisches Patentamt

## European Patent Office

## Office européen des brevets

(11) Numéro de publication: **0 287 414**
**A2**

## (12) DEMANDE DE BREVET EUROPEEN

(21) Numéro de dépôt: **88400703.0**

(22) Date de dépôt: **23.03.88**

(51) Int. Cl.⁴: **G 01 T 1/28**
**H 01 J 43/08**

(30) Priorité: **26.03.87 FR 8704224**

(43) Date de publication de la demande:
**19.10.88 Bulletin 88/42**

(84) Etats contractants désignés:
**CH DE FR GB IT LI NL**

(71) Demandeur: **COMMISSARIAT A L'ENERGIE ATOMIQUE**
**31/33, rue de la Fédération**
**F-75015 Paris (FR)**

(72) Inventeur: **Chianelli, Claude**
**4, Avenue de Camoens**
**F-78150 Rocquencourt (FR)**

(74) Mandataire: **Mongrédien, André et al**
**c/o BREVATOME 25, rue de Ponthieu**
**F-75008 Paris (FR)**

(54) Détecteur de particules.

(57) Détecteur de particules, issues notamment d'une source pulsée (25), principalement très peu ionisantes.

Les particules (14) créent une émission d'électrons secondaires (15) en passant à travers une couche très mince de CsI poreux (20) ; des dispositifs multiplicateurs (2, 6) sont prévus. La capacité émissive du CsI poreux est maintenue en inversant par un commutateur (13) le champ électrique appliqué à cette couche par deux électrodes (19, 21), notamment entre deux paquets de particules.

FIG. 1

EP 0 287 414 A2

## Description

## DETECTEUR DE PARTICULES

L'invention concerne un détecteur de particules qui s'applique plus particulièrement à la détection sans perturbation de particules très peu ionisantes, notamment issues d'une source pulsée, et qui ont comme propriété de n'engendrer que des signaux de faible intensité, donc difficilement exploitables pour des mesures. Ce détecteur, utilisé principalement pour des expériences de temps de vol, doit, par ailleurs, déterminer avec une bonne résolution l'écart temporel entre particules.

Une solution employée consiste à faire traverser par ces particules une cible comprenant une électrode plane et très mince sur laquelle est déposée une couche de matériau de très faible densité présentant une bonne émission d'électrons secondaires, ceux-ci étant ensuite extraits de cette couche à l'aide d'un champ électrique appliqué par une électrode extractrice en direction d'un dispositif de comptage et de mémorisation des impulsions. On peut intercaler, si nécessaire, entre l'électrode extractrice et le système de comptage, des éléments multiplicateurs du faisceau d'électrons, et en particulier d'autres couches émettrices d'électrons secondaires. Parmi les dispositifs de l'art antérieur qui répondent à cette description, on peut mentionner celui de DIETZ, HANRAHAN et HANCE (The review of scientific instruments, vol.38, n°2, p.176, février 1967) ainsi que celui du brevet européen E-A2-0 018 253.

On constate toutefois que, si le faisceau traversant la couche émissive est très intense, l'émission d'électrons secondaires augmente avec le temps, ceci jusqu'à une valeur critique où, brutalement, l'émission reprend sa valeur initiale. Cette instabilité, due à une augmentation du potentiel de la couche dans sa partie opposée à l'électrode provoquée par un phénomène de charge ou de polarisation engendré par le départ des électrons secondaires, est néfaste si l'on désire obtenir une détection reproductible et fiable.

On a imaginé (voir article de LORIKIAN "A new detector for the energy determination of relativistic particles", Colloque International sur l'Electronique Nucléaire Versailles 1968 ) de disposer, entre la couche émissive et l'électrode extractrice, une grille portée à un potentiel fixe de façon à éviter ces instabilités. Les inconvénients sont alors essentiellement une diffusion du faisceau d'électrons et une variation de leur temps de transit vers les dispositifs de mesure, des fluctuations temporelles de l'émission dues à la faiblesse du champ électrique entre l'électrode et la grille, et une interposition de matière sur la trajectoire des particules et des électrons. On se heurte donc de nouveau à une perte de précision dans les résultats.

Selon l'invention, on évite ces caractéristiques désavantageuses en utilisant une couche émissive constituée d'un halogénure alcalin poreux de faible épaisseur inférieure à cent micromètres environ et avantageusement de quelques dizaines de micromètres. L'inventeur a en effet constaté qu'aucun phénomène de charge ne se produit pour ces faibles épaisseurs et qu'on obtient donc un fonctionnement dépourvu de perturbation et d'instabilité. Les détecteurs connus auparavant emploient de leur côté des couches d'halogénure alcalin poreux plus épaisses avec l'idée implicite que, si les particules traversent une quantité de matière plus importante, elles produiront davantage d'électrons secondaires et seront donc plus facilement détectées.

Il est cependant plus important de se préoccuper de l'efficacité du détecteur, c'est-à-dire de s'assurer que chaque particule incidente produit bien des électrons secondaires, ce qui n'est pas évident quand les particules sont faiblement ionisantes. Or, les essais menés avec des couches minces d'halogénure alcalin poreux ont permis de vérifier que leur efficacité est presque totale et ne se dégrade pas avec le temps : toutes les particules sont détectées.

L'amplification du signal par multiplication des électrons secondaires est effectuée ultérieurement : les électrons secondaires originaires de la couche poreuse sont arrachés de celle-ci par un champ électrique et projetés vers un ensemble multiplicateur dont le premier étage peut être une seconde couche d'halogénure alcalin. Puisque les exigences sur cette seconde couche ne sont pas les mêmes, elle sera avantageusement plus mince et en matériau massif contrairement à la première, et elle pourra être plongée dans un champ électrique plus faible.

Ce dernier facteur permet d'éloigner de la seconde couche les électrodes en aval de cette dernière sur le trajet des électrons secondaires ; si cet éloignement est suffisant, la trajectoire des particules à détecter ne traverse pas ces électrodes (qui sont souvent d'autres étages multiplicateurs tels que des galettes microcanaux) et les perturbations qui en résulteraient sont donc évitées.

L'appareil décrit présente toutefois encore un inconvénient constaté par l'inventeur avec l'iodure de césium, car les propriétés d'efficacité et d'émission d'électrons secondaires de la couche d'halogénure alcalin poreux se dégradent au cours de l'utilisation et n'atteignent un état stable, nettement moins performant, qu'après plusieurs heures de fonctionnement. L'invention fournit en conséquence également un moyen de régénération de la couche poreuse qui consiste à lui appliquer périodiquement un champ dépolarisant, de sens inverse au champ d'extraction des électrons secondaires, à l'aide d'un commutateur électrique ou d'un moyen équivalent.

Dans le cas de particules issues d'une source pulsée, ces inversions ont lieu entre deux impulsions de la source de particules, c'est-à-dire durant l'absence de particules, si bien que dans ce cas le dispositif fonctionne durant tout le temps de présence du faisceau et ne présente donc pas de temps mort.

La régénération de la couche poreuse est totale si le produit du champ dépolarisant créé par ladite différence de potentiel négative et de la durée d'application de ce champ dépolarisant, est au moins égal au produit du champ d'extraction créé par ladite différence de potentiel positive et de la durée d'application de ce champ d'extraction.

Dans une réalisation préférée, le détecteur comporte des éléments de focalisation ; de préférence ces éléments s'ouvrent en direction du détecteur, si bien que les particules, arrivant de biais sur la cible, ne traversent pas ces éléments.

L'invention va maintenant être décrite par l'intermédiaire de deux modes de réalisations différents sur les figures annexées à titre illustratif et non limitatif, parmi lesquelles :

- la figure 1 représente un mode de réalisation de l'invention,
- la figure 2 représente un autre mode de réalisation de l'invention,
- la figure 3 explicite le fonctionnement des deux modes de réalisation de l'invention.

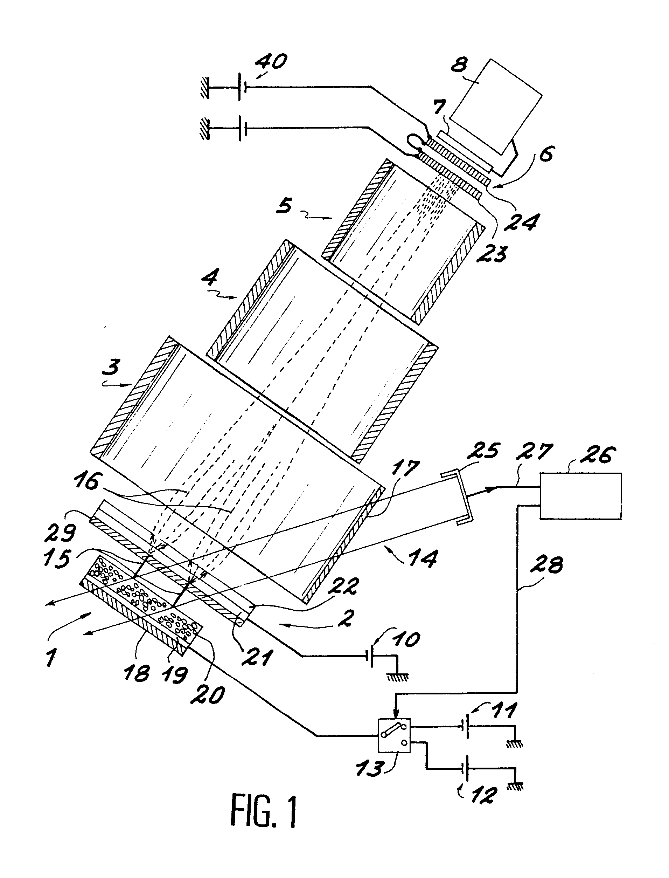

Le détecteur de particules représenté figure 1 comprend successivement, disposés de manière coaxiale, une cible principale 1, une cible multiplicatrice 2, trois groupes d'électrodes de focalisation 3, 4 et 5, un multiplicateur d'électrons 6 et une anode collectrice 7 sur laquelle sont prélevées les impulsions électriques correspondant à la détection d'une particule ; on trouve également sur la figure 1 un dispositif de comptage des impulsions 8.

La cible principale 1 comprend successivement, en se rapprochant de l'anode collectrice 7, un substrat 18 d'alumine de 100 à 200 nanomètres d'épaisseur, une électrode 19 d'aluminium de 30 nm d'épaisseur et une couche d'halogénure alcalin poreux 20 tel que l'iodure de césium CsI, ayant 2 à 3% de la densité du matériau compact, de 10 à 100 micromètres d'épaisseur et obtenu par évaporation lente, ayant duré environ trois quarts d'heure (pour des raisons pratiques, les proportions de ces composants n'ont pas été respectées sur le dessin, pas plus que celles d'autres composants qui vont être décrits plus loin).

Le substrat 18 a un rôle de résistance mécanique et peut donc être constitué d'autres matériaux. La cible multiplicatrice 2 se compose de manière analogue d'un second substrat d'alumine 29, d'une électrode d'extraction 21 en aluminium reliée à une source électrique 10, et d'une couche d'halogénure alcalin 22, massif et non pas poreux, tel que, de nouveau, l'iodure de césium. Leurs épaisseurs respectives peuvent être 100 nm, 30 nm et 60 nm. Cette couche multiplie les électrons secondaires émis par 10 ; la couche poreuse 20 produit quant à elle 15 électrons environ par particule bêta.

Les trois groupes d'électrodes de focalisation 3, 4 et 5 délimitent des espaces de forme généralement cylindrique et engendrent des champs électriques qui diminuent progressivement la section du faisceau d'électrons émis, mais sans excès pour ne pas trop modifier le temps de transit des électrons. Une partie 17 d'un des groupes d'électrodes de focalisation 3 (le côté traversé par le faisceau de particules) présente une épaisseur très faible (100 nm d'alumine et 50 nm d'aluminium).

A la sortie des groupes d'électrodes on rencontre, dans ce mode de réalisation particulier, un multiplicateur d'électrons 6 formé de deux galettes 23 et 24 de micro-canaux et construites dans un matériau moyennement conducteur.

Les surfaces des galettes 23 et 24 sont portées à des potentiels électriques négatifs de moins en moins élevés au fur et à mesure que l'on s'éloigne des cibles 1 et 2, grâce à une source de courant continu 40.

Le multiplicateur d'électrons 6 peut également être constitué par d'autres dispositifs tels qu'un scintillateur et un photomultiplicateur, ou une structure multiplicatrice d'électrons utilisant des dynodes. Tous ces dispositifs sont connus en soi et ne nécessitent pas une description plus poussée.

L'anode collectrice 7 qui est au potentiel zéro, donc positif par rapport à celui des galettes 23 et 24, est disposée sur le chemin des électrons émis, après les galettes 23 et 24.

Dans les variantes de multiplicateurs d'électrons mentionnées plus haut, l'anode collectrice 7 prend des formes différentes tout en continuant à fixer un potentiel accélérateur pour les électrons secondaires incidents ; par exemple dans le cas du couple scintillateur-photomultiplicateur, il s'agit d'une métallisation de la face d'entrée du scintillateur ; dans le cas de la structure à dynodes, c'est la première dynode qui joue ce rôle.

Finalement, cette anode 7 est reliée à un système de comptage des électrons 8 de tout type connu adapté aux taux de comptage attendus qui peuvent être supérieurs à un million de coups par seconde et par centimètre carré.

Le dispositif de la figure 1 reçoit le faisceau de particules issu d'une source pulsée 25 de particules émises sous vide suffisant en un faisceau 14 dont on veut mesurer l'intensité et qui traverse la partie 17 de plus faible épaisseur du groupe d'électrodes de focalisation 3. Il traverse ensuite successivement la cible multiplicatrice 2 et la cible principale 1 ; son passage par la couche d'halogénure alcalin poreux 20 cause une émission d'électrons secondaires.

A cet instant, l'électrode 19 de la cible principale 1 est reliée à une source électrique à potentiel négatif inférieur 11 par l'intermédiaire d'un commutateur 13 à deux positions, de telle sorte que la différence de potentiel entre l'électrode d'extraction 21 de la cible multiplicatrice 2 et l'électrode 19 de la cible principale 1 est positive et de l'ordre de 7000 volts:

les électrons secondaires sont extraits de la couche d'halogénure alcalin poreux 20 et accélérés vers la cible multiplicatrice 2 suivant des trajectoires 15.

Au cours de leur passage dans la couche d'halogénure alcalin massif 22, les électrons secondaires créent un autre phénomène d'émission secondaire, et les électrons secondaires ainsi multipliés passent à l'intérieur de l'espace délimité par les groupes d'électrodes de focalisation 3, 4 et 5 où ils sont focalisés suivant les trajectoires 16.

Comme le potentiel électrique négatif de l'électrode d'extraction 21 est moins élevé que ceux des galettes 23 et 24, les électrons secondaires sont attirés vers celles-ci et pénètrent dans les micro-canaux où les chocs qu'ils subissent contre les parois permettent d'en arracher d'autres électrons de façon à multiplier les électrons par $10^6$ à $10^7$ environ. Les différences de potentiel créées entre les galettes 23 et 24 et entre leurs surfaces respectives permettent à la fois d'en extraire les électrons arrachés, et de les accélérer vers l'anode collectrice 7 et le système de comptage 8 où les impulsions formées sont alors analysées et comptées.

Les galettes 23 et 24 présentent un facteur multiplicateur constant même en cas de bombardements de longue durée ; de même pour la couche d'halogénure alcalin massif 22, dont l'épaisseur autorise une injection régulière de nouveaux électrons, qui remplacent les électrons émis provenant de l'électrode d'extraction 21.

La couche d'iodure de césium poreux 20 de la cible principale 1 est l'objet d'une dégradation progressive de son efficacité et de son émissivité d'électrons secondaires au cours du temps, apparemment par diminution du taux d'émission secondaire. Afin d'éviter cette dégradation, l'invention prévoit un système de pilotage 26, synchronisé par la source pulsée 25 par l'intermédiaire d'une ligne 27, qui effectue également une tâche de synchronisation du potentiel de l'électrode 19 de la cible principale 1.

Après le passage d'un paquet de particules à travers la cible principale 1, le système de pilotage 26 envoie en effet une impulsion dans une ligne 28, qui bascule le commutateur 13 dans une position où il relie l'électrode 19 de la cible principale 1 à une source électrique à potentiel négatif supérieur 12 plus élevé que le potentiel auquel est portée l'anode d'extraction 21. On engendre donc une inversion du champ électrique dans la couche d'iodure de césium poreux 20, qui régénère par dépolarisation ses capacités d'émission secondaire d'électrons : aucune modification ni instabilité n'ont été constatées après plusieurs jours d'essais continus, alors que la décroissance de l'émission secondaire de l'iodure de césium poreux est déjà sensible au bout de quelques dizaines de minutes dans un champ électrique invariable.

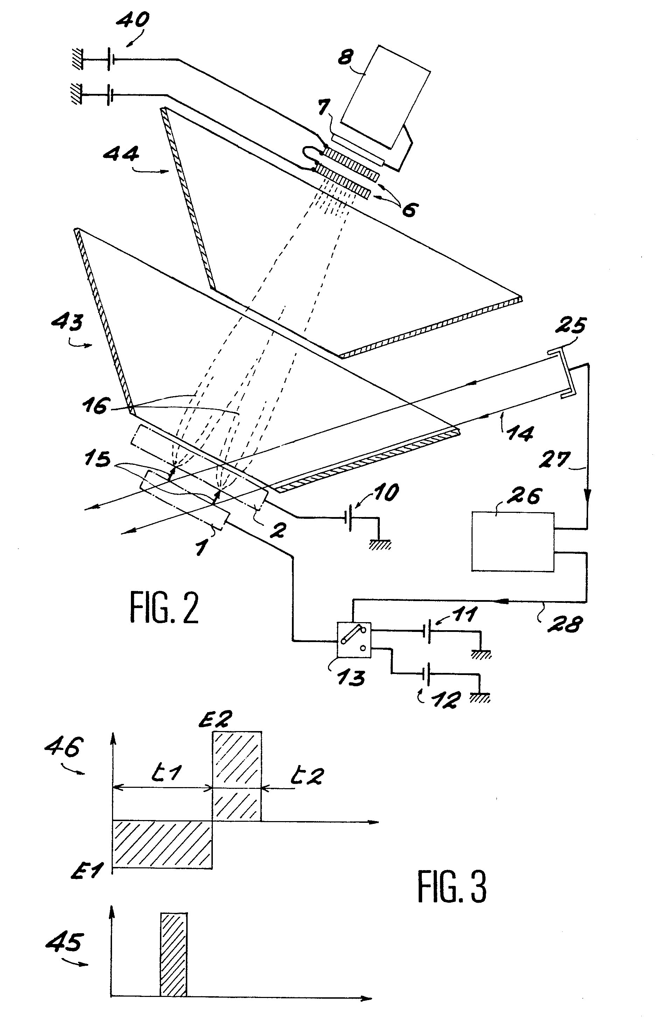

Avant qu'un nouveau paquet de particules ne passe dans la cible principale 1, le système de pilotage 26 doit évidemment envoyer une nouvelle impulsion vers le commutateur 13 pour relier de nouveau l'électrode 19 à la source électrique à potentiel négatif inférieur 11. Le processus peut ensuite être répété périodiquement comme l'indique la figure 3, où le diagramme 45 représente une distribution de particules passant dans la cible principale 1 en fonction du temps, et le diagramme 46 la différence de potentiel entre l'électrode 19 de la source principale 1 et l'électrode d'extraction 21 en fonction du temps. Il est nécessaire d'appliquer un champ dépolarisant à tous les intervalles entre les passages de paquets de particules si l'on désire conserver une émission secondaire parfaitement constante. L'amplitude et la durée du champ dépolarisant seront réglées par une "loi des aires" : le produit du champ d'extraction, $E_1$ en valeur absolue, par le temps d'application $t_1$ de ce champ $E_1$ est au plus égal au produit du champ dépolarisant $E_2$ par le temps d'application $t_2$ de ce champ dépolarisant $E_2$. Dans le cas contraire, la dégradation de la couche poreuse se produit, quoique ralentie. Par ailleurs, on peut évidemment utiliser le détecteur selon l'invention pour une source de particules à fonctionnement non pulsé ; la période d'application du champ dépolarisant $E_2$ correspondra simplement à un temps mort du détecteur. Le champ d'extraction $E_1$ a une valeur de l'ordre de 15 kV/cm.

A noter que le champ dans lequel la couche d'halogénure alcalin massif 22 est plongée est nettement moins intense car il n'est pas nécessaire d'en arracher les électrons. Cette circonstance permet d'en éloigner les galettes 23 et 24.

Le dispositif de la figure 1 garantit donc un décompte précis des particules émises par la source pulsée 25 grâce à des multiplicateurs d'électrons à fonctionnement stable. Il présente néanmoins un inconvénient, car le faisceau 14 doit traverser un des groupes d'électrodes de polarisation 3, et c'est pourquoi on a prévu une épaisseur plus faible dans la partie 17 concernée.

Un dispositif légèrement différent, représenté figure 2, est donc également proposé et décrit. Il diffère du précédent uniquement par ses éléments de focalisation ; ses autres éléments sont inchangés et portent les mêmes références ; son fonctionnement est également le même.

Dans ce nouveau dispositif les groupes d'électrodes de focalisation portent les références 43 et 44 et se caractérisent par une forme sensiblement tronconique, ouverte vers le détecteur 8. L'angle d'ouverture doit être suffisant pour que le faisceau 14 de particules arrive directement sur les cibles 1 et 2 sans rencontrer d'autre matière : le faisceau 14 subit une diffusion moins grande.

On obtient donc un dispositif plus efficace au prix d'un encombrement un peu supérieur.

Dans les deux cas, les éléments de focalisation permettent d'éloigner du faisceau de particules les étages multiplicateurs terminaux, tels que les microcanaux, qui pourraient engendrer des impulsions de détection parasites. Ils permettent de plus d'adapter la taille de la cible à celle des étages multiplicateurs terminaux, tels que les microcanaux, dont le coût est élevé pour des surfaces importantes. Enfin, il est plus simple de transférer les électrons selon des trajets convergents que selon des trajets parallèles. La convergence des trajets doit toutefois demeurer faible pour ne pas affecter la précision de détermination des écarts temporels, le temps de propagation des électrons étant plus réduit lorsque les particules sont détectées sur l'axe du dispositif que lorsqu'elles le sont sur la périphérie.

Au total, l'invention a pour objet un détecteur de particules aux caractéristiques stables dans le temps et qui peut déceler des particules très peu ionisantes. Il doit rester présent à l'esprit que certains composants peuvent être agencés différemment sans sortir du cadre de l'invention ; en particulier, la multiplication des électrons secondaires peut être assurée par plusieurs moyens équivalents, de même que l'inversion du champ électrique.

## Revendications

1. Détecteur de particules comprenant une cible principale (1) formée d'une première électrode (19) et d'une couche d'halogénure alcalin poreux (20), traversée par les particules (14) et émettant alors des électrons secondaires en fonction du type et de l'énergie des particules, une deuxième électrode (21) d'extraction des électrons secondaires disposée face à la couche d'halogénure alcalin poreux (20) et à faible distance de celle-ci, un ensemble multiplicateur (22, 6) des électrons secondaires, une anode (7) collectant les électrons secondaires issus de l'ensemble multiplicateur, caractérisé en ce que la couche d'halogénure alcalin poreux (20) a une épaisseur inférieure à cent micromètres.

2. Détecteur de particules selon la revendication 1, caractérisé en ce que la deuxième électrode (21) porte un revêtement d'halogénure alcalin massif (22) que les électrons secondaires émis hors de la couche d'halogénure alcalin poreux (20) traversent, et qui possède des propriétés d'émission secondaire d'électrons.

3. Détecteur de particules selon la revendication 1 ou 2, caractérisé en ce que l'halogénure alcalin poreux est de l'iodure de césium.

4. Détecteur de particules selon l'une quelconque des revendications 1 à 3, caractérisé en ce qu'il comprend des moyens (13, 11, 12) pour appliquer, de manière répétée, tour à tour une différence de potentiel positive et une différence de potentiel négative entre la deuxième électrode (21) et la première électrode (19).

5. Détecteur de particules selon la revendication 4, caractérisé en ce que le produit du champ dépolarisant ($E_2$) créé par ladite différence de potentiel négative et de la durée d'application de ce champ dépolarisant ($t_2$), est au moins égal au produit du champ d'extraction ($E_1$) créé par ladite différence de potentiel positive et de la durée d'application ($t_1$) de ce champ d'extraction.

6. Détecteur de particules selon l'une quelconque des revendications 1 à 5, caractérisé en ce qu'il comprend des éléments de focalisation (3, 4, 5, 43, 44) englobant un espace parcouru par les électrons secondaires entre la deuxième électrode (21) et l'anode (7).

7. Détecteur de particules selon la revendication 6, caractérisé en ce que des éléments de focalisation (43) ont une forme s'ouvrant en direction de l'anode (7), et en ce que les particules (14) passent à l'intérieur d'un espace délimité par lesdits éléments de focalisation.

0287414

FIG. 1

0287414

FIG. 2

FIG. 3